# EUROPÄISCHE PATENTANMELDUNG

(11) **EP 0 646 433 A1**
(43) Veröffentlichungstag der Anmeldung: **05.04.1995**
(21) Anmeldenummer: 94114827.2
(22) Anmeldetag: 20.09.1994
(51) Int. Cl.: B23K 11/24

(54) **Verfahren und Vorrichtung zum elektrischen Widerstandsschweissen dünner Bleche bei hohen Geschwindigkeiten**

(30) Priorität: 30.09.1993 DE 4333223
(71) Anmelder: SIEMENS AKTIENGESELLSCHAFT, D-80333 München (DE)
(72) Erfinder: Götze, Thomas, D-09126 Chemnitz (DE); Klärner, Thomas, D-08064 Zwickau (DE)

(57) **Zusammenfassung**

Zur Speisung eines Schweißtransformators (T) mit einer vorgegebenen Stromform wird ein Ein-Rückspeisemodul (EIR) und ein herkömmliches Servo-Modul (1) verwendet. Das Ein-Rückspeisemodul (EIR) realisiert die Netzanbindung und schafft einen geregelten 600 V Zwischenkreis. Das Servo-Modul (1) wird als einphasige Stromquelle programmiert und an den aktiven Ausgängen der Schweißtransformator (T) angeschlossen. Eine spezielle Sollwertquelle liefert den Stromsollwert an das Servo-Modul (1) und wird von einer speicherprogrammierbaren Steuerung gesteuert.

## Beschreibung

Die Erfindung betrifft ein Verfahren zum elektrischen Widerstandsschweißen, insbesondere zur Herstellung zylindrischer, dünnwandiger Blechemballagen auf Rollennahtschweißmaschinen bei hohen Geschwindigkeiten.

Gemäß dem Stand der Technik werden zur Herstellung längsnahtgeschweißter Blechemballagen bei hohen Geschwindigkeiten entweder mittelfrequente, annähernd sinusförmige Schweißströme oder niederfrequente, annähernd rechteckförmige Schweißströme verwendet.

Die Verwendung von mittelfrequenten Strömen ist weit verbreitet. Es kommen hier entweder rotatorische Umformer oder statische Umrichter zum Einsatz. Alle diese Verfahren besitzen den Nachteil hoher Wirbelstrom- und Hysteresisverluste aufgrund der hohen Frequenz des verwendeten Schweißstromes. Es ergibt sich hieraus ein schlechter Maschinenwirkungsgrad verbunden mit beachtlichem Aufwand für Kühlmaßnahmen an der Schweißmaschine.

Die Verwendung von niederfrequenten, annähernd rechteckförmigen Schweißströmen wie in DD 285 701, EP 0 064 570, DE 30 05 083 vorgeschlagen, vermeidet zwar die hohen Wirbelstrom- und Hysteresisverluste, führt aber bei dünnen Blechen zu unbefriedigenden Schweißnahtqualitäten.

Der Erfindung liegt die Aufgabe zugrunde, ein Verfahren zu schaffen, welches beim elektrischen Widerstandsschweißen dünner Bleche bei hohen Geschwindigkeiten dadurch gekennzeichnet ist, daß bei geringen Wirbelstrom- und Hysteresisverlusten eine hohe Nahtqualität erreicht wird.

Erfindungsgemäß wird diese Aufgabe gelöst, indem einem niederfrequenten, annähernd rechteckförmigen Strom ein sinusförmiger höherfrequenter Stromanteil überlagert wird. Dieser höherfrequente Anteil bewirkt, daß das Schweißgut während der Verweilzeit zwischen den Elektroden mehrere Erwärmungs- und Abkühlphasen durchläuft. Da die Frequenz des höherfrequenten Stromanteils f₂ ein ganzzahliges, ungeradzahliges Vielfaches der Frequenz f₁ des annähernd rechteckförmigen Stromanteils beträgt, ergeben sich bei jedem Polaritätswechsel des Schweißstromes gleiche thermische Verhältnisse, was für eine gleichbleibende Nahtqualität unerläßlich ist. Durch die geforderte Phasenbeziehung gemäß Anspruch 2 ergibt sich, in Verbindung mit dem ungeradzahligen Frequenzverhältnis, daß vor und nach jedem Polaritätswechsel des Schweißstromes ein Maximum des Energieeintrages vorliegt. Diese beiden, aufeinanderfolgenden Maxima sind vorteilhaft, um den Wärmeeinbruch bei jedem Polaritätswechsel zu kompensieren. Dieser Wärmeeinbruch resultiert aus der Tatsache, daß aufgrund der stark induktiven Lastimpedanz der Schweißstrom sich nur mit endlicher Geschwindigkeit ändern kann. Die Zeitdauer 2t_{R} des Polaritätswechsels hängt dabei von der verwendeten Stromquelle und der induktiven Zeitkonstante der Lastimpedanz ab.

Durch Variation der Verhältnisse I₂/I₁ und f₂/f₁ sowie der Werte für I₁ und f₁, ist es möglich, für jeden technologischen Anwendungsfall bezüglich Material, Schweißgeschwindigkeit, Elektrodengeometrie und weiteren Maschinenparametern, optimale Schweißnahtqualitäten in Verbindung mit minimal möglichen Wirbelstrom- und Hysteresisverlusten zu erreichen.

Anhand des folgenden Ausführungsbeispiels soll das Wesen der Erfindung verdeutlicht werden.

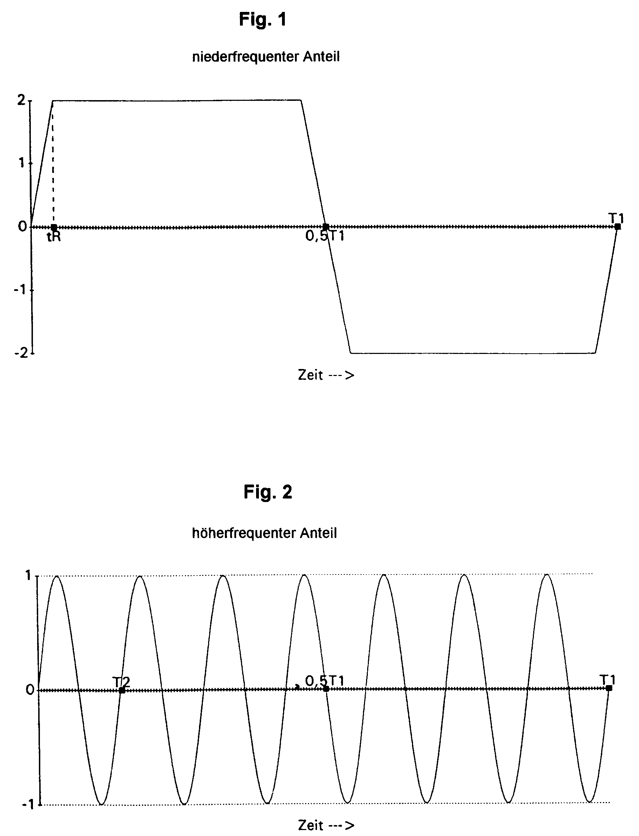

In FIG 1 ist der Verlauf des niederfrequenten, annähernd rechteckförmigen Schweißstromanteils mit der normierten Amplitude I₁ = 2 dargestellt. Die Frequenz f₁ ergibt sich dabei aus 1/T₁. Der Zeitanteil 2t_{R} soll dabei die Reversierdauer des Stromes beim Polaritätswechsel kennzeichnen. Diese Zeitdauer ist durch die induktive Zeitkonstante der Lastimpedanz bedingt.

In FIG 2 ist der Verlauf des höherfrequenten, sinusförmigen Schweißstromanteils mit der normierten Amplitude I₂ = 1 dargestellt. Die Frequenz f₂ ergibt sich dabei aus 1/T₂. Das Frequenzverhältnis f₂/f₁ beträgt in diesem Ausführungsbeispiel 7, das Amplitudenverhältnis I₂/I₁ hat den Wert 0,5.

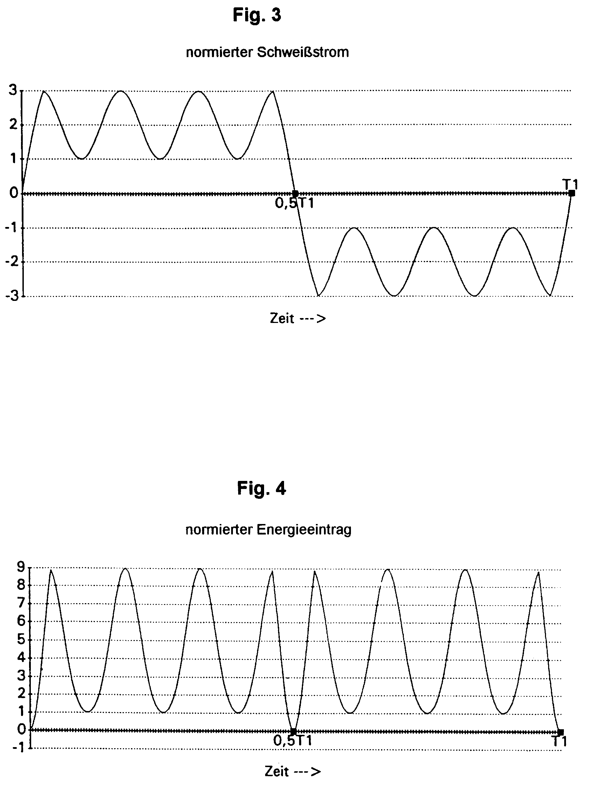

In FIG 3 ist der resultierende, normierte Schweißstromverlauf entsprechend der Addition beider Schweißstromanteile dargestellt. Deutlich ist der symmetrische Verlauf bezüglich der Stromnulldurchgänge erkennbar.

In FIG 4 ist das Quadrat des resultierenden, normierten Schweißstromes gezeigt. Dieser Verlauf kann zur Beurteilung des Energieeintrages genutzt werden, da dieser proportional dem Quadrat des Schweißstromes ist. Deutlich sind die Maxima vor als auch nach dem Polaritätswechsel des Stromes sichtbar.

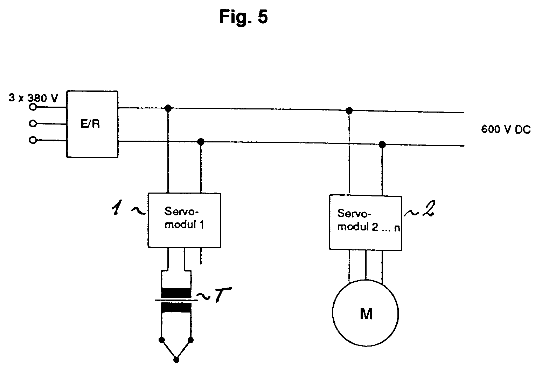

FIG 5 zeigt eine Einrichtung zur Durchführung des Verfahrens. Ein Ein-Rückspeisemodul E/R ist eingangsseitig am dreiphasigen Netz angeschlossen und bildet ausgangsseitig einen Spannungszwischenkreis. An diesem Spannungszwischenkreis sind über ein Servo-Modul 1 ein Schweißtransformator T sowie über weitere Servo-Module 2 bis n Motoren M angeschlossen. Die Servo-Module sind standardmäßige Drehstrompulssteller, die im Normalfall zur Stromregelung von Servomotoren verwendet werden. Für die Zwecke der Erfindung wird der Servo-Modul 1 als einphasige Stromquelle programmiert und an ihren aktiven Ausgängen der Schweißtrafo angeschlossen. Eine spezielle Sollwertquelle liefert den Stromsollwert an den Servo-Modul und wird von einer nicht dargestellten speicherprogrammierbaren Steuerung gesteuert. Wie dargestellt, können am Zwischenkreis alle anderen an der Schweißmaschine benötigten Servo-Antriebe gespeist werden. In der dargestellten Anordnung entfällt durch die Verwendung des wirtschaftlichen Servo-Moduls eine spezielle Schweißstromquelle. Durch den Betrieb des Servo-Moduls als Sollwertquelle ist der Stromverlauf frei programmierbar.

## Patentansprüche

1. Verfahren zum elektrischen Widerstandsschweißen dünner Bleche bei hohen Geschwindigkeiten auf einer Schweißmaschine, deren Elektroden mit einer Schweißstromquelle verbunden sind, welche einen Schweißstrom erzeugt, **dadurch gekennzeichnet,** daß der Schweißstrom aus einem niederfrequenten, annähernd rechteckförmigen Stromanteil mit der Frequenz (f₁) und der Amplitude (I₁) besteht, diesem Stromanteil ein höherfrequenter sinusförmiger Stromanteil mit der Frequenz (f₂) und der Amplitude (I₂) überlagert ist, dabei die Amplitude (I₁) größer als die Amplitude (I₂) ist, und die Frequenz (f₂) ein ganzzahliges, ungerades Vielfaches der Frequenz (f₁) beträgt.

2. Verfahren nach Anspruch 1, **dadurch gekennzeichnet,** daß der höherfrequente Stromanteil mit (f₂,I₂) gleichphasig zu dem Spektralanteil des niederfrequenten, annähernd rechteckförmigen Stromanteils ist, welcher die Frequenz (f₂) besitzt.

3. Verfahren nach Anspruch 1 und 2, **dadurch gekennzeichnet,** daß das Amplitudenverhältnis (I₂/I₁) in Abhängigkeit vom Material und von der Materialstärke verändert wird.

4. Verfahren nach Anspruch 1 und 2, **dadurch gekennzeichnet,** daß das Frequenzverhältnis (f₂/f₁) in Abhängigkeit von der Schweißgeschwindigkeit und der Elektrodengeometrie gesteuert wird.

5. Verfahren nach Anspruch 1 und 2, **dadurch gekennzeichnet,** daß die Frequenz (f₁) des niederfrequenten Stromanteils in Abhängigkeit von der Schweißgeschwindigkeit gesteuert wird.

6. Verfahren nach Anspruch 1 und 2, **dadurch gekennzeichnet,** daß die Amplitude (I₁) des niederfrequenten Stromanteils in Abhängigkeit von Material- und Maschinenparametern gesteuert wird.

7. Anordnung zur Durchführung des Verfahrens nach Anspruch 1, ...**dadurch gekennzeichnet,** daß die Schweißstromquelle aus einem vorzugsweise statischen Umrichter und einem Schweißtransformator besteht.

8. Schaltungsanordnung für eine Widerstandsschweißmaschine mit insbesondere periodischem Wechselstrom, unter Verwendung eines Schweißtransformators dessen Sekundärklemmen mit Schweißelektroden verbunden sind, **dadurch gekennzeichnet,** daß an einem gemeinsamen Gleichspannungszwischenkreis sowohl die Achsmodule für die Speisung der an der Schweißmaschine vorhandenen elektrischen Antriebe, als auch der statische Wechselrichter zur Speisung der Primärwicklung des Schweißtransformators angeschaltet sind.

9. Schaltungsanordnung nach Anspruch 8, **dadurch - gekennzeichnet,** daß für den statischen Wechselrichter zur Speisung der Primärwicklung des Schweißtransformators ein an sich bekanntes AC-Servo-Achsmodul zum Einsatz kommt, wobei dessen dritte Phase unbeschaltet bleibt.

10. Schaltungsanordnung nach Anspruch 8, **dadurch gekennzeichnet,** daß für den statischen Wechselrichter zur Speisung der Primätuicklung des Schweißtransformators ein an sich bekanntes DC-Servo-Achsmodul für 4-Quadrantenbetrieb zum Einsatz kommt.

11. Schaltungsanordnung nach Anspruch 8 und den Ansprüchen 9 oder 10, **dadurch gekennzeichnet,** daß das Servo-Achsmodul in der Betriebsart Momentenregelung betrieben wird, und sein Strom-Sollwerteingang mit einem Signal beaufschlagt wird, das dem Abbild des zu realisierenden Schweißstromverlaufes entspricht.

12. Schaltungsanordnung nach Anspruch 11, **dadurch gekennzeichnet,** daß mittels eines schnellen Stromsensors ein momentanes Strom-Istwertsignal gebildet wird und der Stromsensor dabei den Primärstrom des Schweißtransformators erfaßt.

13. Schaltungsanordnung nach einem der vorstehenden Ansprüche, **dadurch gekennzeichnet,** daß der Gleichspannungszwischenkreis geregelt ist, und eine stabilisierte Gleichspannung von vorzugsweise 600 V liefert.
